(19) 

Europäisches Patentamt

European Patent Office

Office européen des brevets

(11) **EP 1 882 522 A1**

(12) **EUROPEAN PATENT APPLICATION**
published in accordance with Art. 153(4) EPC

(43) Date of publication:
**30.01.2008 Bulletin 2008/05**

(21) Application number: **06715432.8**

(22) Date of filing: **09.03.2006**

(51) Int Cl.:
*B01J 20/20* (2006.01)  *C01B 3/00* (2006.01)
*C01B 31/02* (2006.01)  *H01M 8/00* (2006.01)
*H01M 8/04* (2006.01)  *H01M 8/06* (2006.01)

(86) International application number:
**PCT/JP2006/304561**

(87) International publication number:
**WO 2006/095800 (14.09.2006 Gazette 2006/37)**

(84) Designated Contracting States:
**DE FR GB**

(30) Priority: **11.03.2005 JP 2005068449**
**24.05.2005 JP 2005150748**

(71) Applicant: **Nissan Motor Company Limited**
**Kanagawa-ku**
**Yokohama-shi, Kanagawa 221-0023 (JP)**

(72) Inventors:
• **KATAMURA, Junji**
**560-2, Okatsukoku, Atsugi-shi**
**Kanagawa 243-0192 (JP)**

• **KAWAI, Mikio**
**560-2, Okatsukoku, Atsugi-shi**
**Kanagawa 243-0192 (JP)**

(74) Representative: **Görz, Ingo**
**Hoefer & Partner**
**Patentanwälte**
**Pilgersheimer Strasse 20**
**81543 München (DE)**

(54) **HYDROGEN STORAGE MATERIAL, HYDROGEN STORAGE STRUCTURE, HYDROGEN STORER, HYDROGEN STORAGE APPARATUS, FUEL CELL VEHICLE, AND PROCESS FOR PRODUCING HYDROGEN STORAGE MATERIAL**

(57) A hydrogen storage material including: molecular layers $L_1$ to $L_{i+2}$ which are stacked on one another in parallel and mainly composed of six-membered rings having carbon atoms; and protrusions $Pr_{1a}$ to $Pr_i$ protruding from atomic planes of adjacent molecular layers $L_1$ to $L_{i+2}$ by lengths of not more than interlayer distances $d_1$ to $d_{i+2}$ of the adjacent molecular layers.

FIG. 1

EP 1 882 522 A1

## Description

## Technical Field

The present invention relates to a hydrogen storage material, a hydrogen storage structure, a hydrogen storage, a hydrogen storage apparatus, a fuel cell vehicle, and a method of manufacturing the hydrogen storage material.

## Background Art

In order to put fuel cell vehicles into practical use, it has been desired to develop an efficient hydrogen storage system using a low-cost and lightweight hydrogen storage material with high hydrogen storage density. Many studies have been conducted on especially hydrogen storage systems using carbon materials. As the carbon materials, activated carbon, graphite intercalation compounds (GIC), single-walled carbon nanotubes (SWNT), multi-walled carbon nanotubes (MWNT), graphite nanofibers (GNF), fullerenes, and the like are known. These carbon materials involve problems in storage and release properties at room temperature, manufacturing cost, mass productivity, and yield, and examinations are in progress to solve these problems.

In the case of using graphite as the hydrogen storage material, it is shown by an analysis using a calculator that a slit space between graphite layers or a space inside a cylinder formed of a rolled graphite layer provides higher hydrogen adsorption capability than the surface of a graphite layer provides and accordingly can store hydrogen with higher density (see Q. Wang and J. K. Johnson, J. Phys. Chem. B103, 277-281 (1991)). Especially in the case where width of the slit space or diameter of the cylindrical space is increased, it is expected that high hydrogen density can be obtained, and examinations are therefore being conducted on increasing the width of the slit space. As the materials including the slit space, materials including so-called expanded graphite are being examined. The Japanese Patent Laid-open Publications No. 2002-53301 and No. 2001-26414 propose methods of increasing spacing between the graphite layers by controlling expansion conditions. Moreover, the Japanese Patent Laid-open Publication No. 11-70612 proposes a method of increasing spacing between the graphite layers by polymerization of unsaturated hydrocarbon.

## Disclosure of the Invention

However, just increasing the spacing between the graphite layers reduces the material density and causes reduction in hydrogen storage capacity per unit volume of the hydrogen storage material. Moreover, the expanded space between the graphite layers is compressed in high pressure hydrogen, which reduces the hydrogen storage capacity under high pressure. Furthermore, in the case of increasing the spacing between the graphite layers by polymerization of unsaturated hydrocarbon, the polymerized unsaturated hydrogen is released out of the graphite layers by heat due to adiabatic compression during introduction of hydrogen, high pressure hydrogen, and the like, and the space formed between the graphite layers can be broken.

The present invention was made in the light of the aforementioned problems, and an obj ect of the present invention is to provide a hydrogen storage material which can store hydrogen within the hydrogen storage material at high density in high pressure hydrogen.

A hydrogen storage material according to the present invention is characterized by including: molecular layers stacked on one another in parallel and mainly composed of six-membered rings having carbon atoms; and protrusions protruding from atomic planes of a pair of adjacent ones of the molecular layers by a length of not more than an interlayer distance of the adjacent molecular layers.

A hydrogen storage structure according to the present invention is characterized by including: first and second molecular layers; and a polymer protruding from an atomic plane of one of the first and second molecular layers by a length of not more than an interlayer distance between the first and second molecular layers to define storage regions capable of storing hydrogen.

A method of manufacturing a hydrogen storage material according to the present invention is characterized by including: an insertion step of inserting a foreign molecule between a pair of adjacent ones of molecular layers which are stacked on one another in parallel and mainly composed of six-membered rings having carbon atoms to provide an expanded portion between the adjacent molecular layers; and a protrusion forming step of forming a protrusion protruding by a length of not more than an interlayer distance between the adjacent molecular layers from an atomic plane of one of the adjacent molecular layers toward an atomic plane of the other molecular layer.

A hydrogen storage according to the present invention is characterized by including the hydrogen storage material according to the present invention.

A hydrogen storage apparatus according to the present invention is characterized by including: the hydrogen storage according to the present invention.

A fuel cell vehicle is characterized by including the hydrogen storage apparatus according to the present invention.

## Brief Description of the Drawings

FIG. 1a is a schematic cross-sectional view showing a hydrogen storage material according to a first embodiment of the present invention. FIG. 1b is a schematic cross-sectional view showing a hydrogen storage material according to a modification of the first embodiment of the present invention.

FIG. 2 is a schematic view for explaining a molecular layers.

FIG. 3a is a schematic cross-sectional view showing a hydrogen storage material according to a second embodiment of the present invention. FIG. 3b is a schematic cross-sectional view showing a hydrogen storage material according to a modification of the second embodiment of the present invention.

FIG. 4a is a schematic cross-sectional view showing a hydrogen storage material according to a third embodiment of the present invention. FIG. 4b is a schematic cross-sectional view showing a hydrogen storage material according to a modification of the third embodiment of the present invention.

FIG. 5 is a schematic cross-sectional view showing a hydrogen storage material according to a fourth embodiment of the present invention.

FIG. 6 is a schematic cross-sectional view showing a mode of a hydrogen storage apparatus according to the embodiments of the present invention.

FIG. 7 is a side view showing a mode of a fuel cell vehicle according to the embodiments of the present invention.

FIG. 8 is a histogram showing stabilization energy.

FIG. 9 is a histogram showing stabilization energy.

FIG. 10 includes calculated molecular model diagrams showing bonds of the hydrogen storage material according to the embodiments of the present invention for comparison.

FIG. 11 is a graph showing a relation between area density and the hydrogen storage capacities.

## Best Modes for Carrying out the Invention

Hereinafter, a description is given of hydrogen storage materials, hydrogen storage structures, a hydrogen storage, a hydrogen storage apparatus, a hydrogen fuel cell vehicle, and a manufacturing method of the hydrogen storage apparatus according to embodiments of the present invention in detail.

(Hydrogen Storage Material and Hydrogen Storage Structure)

First, the hydrogen storage materials and hydrogen storage structures according to the embodiments of the present invention are described.

First Embodiment

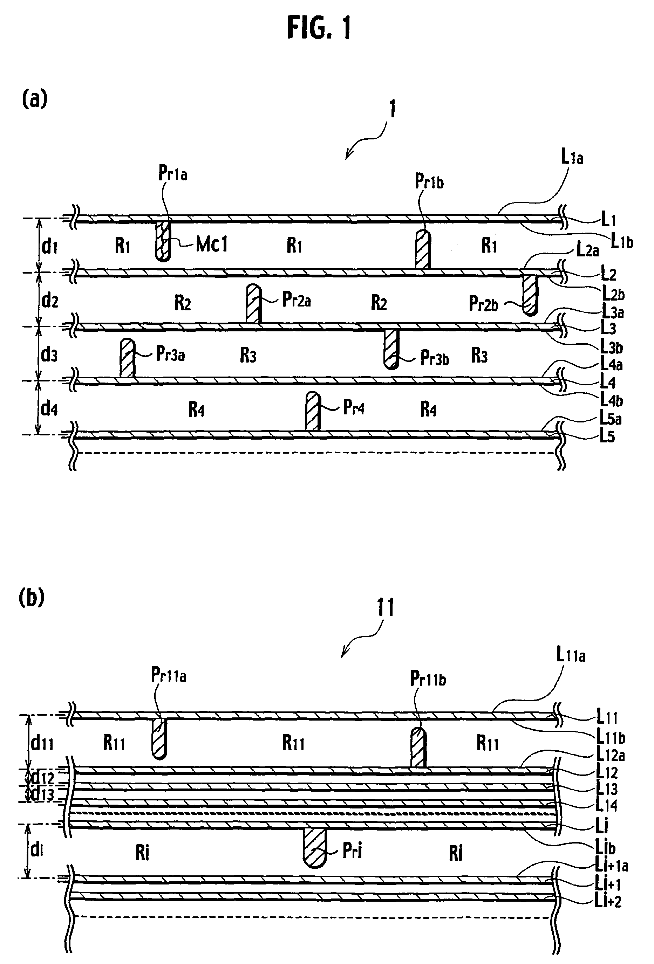

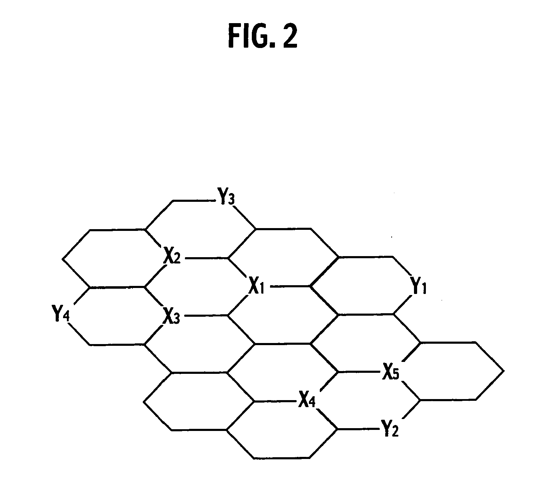

FIGS. 1a and 1b show schematic cross-sectional views of a hydrogen storage material 1 according to a first embodiment of the present invention and a hydrogen storage material 11 according to a modification of the first embodiment, respectively, and FIG. 2 shows a view for explaining molecular layers. The hydrogen storage material 1 includes a plurality of molecular layers $L_1$ to $L_5$ and protrusions $Pr_1$ to $Pr_4$. The molecular layers $L_1$ to $L_5$ are stacked on one another in parallel. As shown in FIG. 2, each layer is mainly composed of a plurality of connected six-membered rings having carbon atoms. Each of $X_1$ to $X_5$ and $Y_1$ to $Y_5$ in FIG. 2 indicates a carbon or a substitutional atom which is a different atom substituted for a carbon atom. In FIGS. 1a and 1b, each of $d_1$ to $d_4$ indicates a distance between centers of adjacent molecular layers (hereinafter, referred to as an interlayer distance).

Protrusions $Pr_1$ to $Pr_4$ protrude from upper surfaces and/or lower surfaces of molecular layers $L_1$ to $L_5$ and protrude by lengths of not more than the interlayer distances between adjacent molecular layers from atomic planes of the adjacent molecular layers to increase spacing between adjacent molecular layers, thus defining hydrogen storage regions (expanded portions) $R_1$ to $R_4$ which are capable of storing hydrogen. Each of the protrusions $Pr_1$ to $Pr_4$ is composed of a molecular chain, for example, as indicated by Mc1 in the protrusion $Pr_{1a}$. The other protrusions are the same, but the molecular chains are omitted in the drawing to facilitate illustration. As shown in FIG. 1(a), the protrusion $Pr_{1a}$ having a length of not more than an interlayer distance $d_1$ between the molecular layers $L_1$ and $L_2$, which are first and second molecular layers, respectively, protrudes from an atomic plane $L_{1b}$ of the molecular layer $L_1$ to an atomic plane $L_{2a}$ of the molecular layer $L_2$, and a protrusion $Pr_{1b}$ having a length of not more than the interlayer distance $d_1$ between the molecular layers $L_1$ and $L_2$, which are the first and second molecular layers, respectively, protrudes from

the atomic plane $L_{2a}$ of the molecular layer $L_2$ to the atomic plane $L_{1b}$ of the molecular layer $L_1$, to define the storage regions $R_1$ capable of storing hydrogen. The molecular layers $L_1$ to $L_5$ are stacked on one another in parallel, and the hydrogen storage regions $R_1$ to $R_4$ are hierarchically arranged..

The hydrogen storage material and structure according to the first embodiment of the present invention is constituted as described above and therefore can secure space capable of structurally adsorbing hydrogen between the molecular layers and maintain the space even in high-pressure hydrogen. Accordingly, it is possible to store hydrogen within the hydrogen storage material at high density even in high-pressure hydrogen. Moreover, the protrusions prevent storage space storing hydrogen from being broken by moisture and heat. The storage space storing hydrogen can be therefore maintained, and the hydrogen capacities per unit mass and unit volume of the hydrogen storage material are increased.

Such a hydrogen storage region is not necessarily formed between every pair of adjacent molecular layers. For example, as shown in FIG. 1(b), the hydrogen storage material 11 according to the modification of the first embodiment includes a protrusion $Pr_{11a}$ having a length of not more than an interlayer distance $d_{11}$ between molecular layers $L_{11}$ and $L_{12}$ from an atomic plane $L_{11b}$ of the molecular layer $L_{11}$ to an atomic plane $L_{12a}$ of the molecular layer $L_2$ and a protrusion $Pr_{11b}$ having a length of not more than the interlayer distance $d_{11}$ from the atomic plane $L_{12a}$ of the molecular layer $L_{12}$ to the atomic plane $L_{11b}$ of the molecular layer $L_{11}$ to define storage regions $R_{11}$ capable of storing hydrogen and includes no joints between each pair of adjacent ones of molecular layers $L_{12}$ to $L_i$. The hydrogen storage material 11 may include a pair of adjacent molecular layers between which the hydrogen storage region is not formed.

Preferably, the protrusions $Pr_1$ to $Pr_i$ are bonded to the atomic planes $L_{1a}$ to $L_{i+1a}$ by bonds selected from covalent bonds, ionic bonds, and metallic bonds. Generally, in graphite, molecular layers constituting graphite are bonded by intermolecular force. Since the bonds by intermolecular force are weak, just increasing the spacing between the molecular layers allows spaces between the molecular layers to be easily crushed in high pressure hydrogen before hydrogen enters between the molecular layers, and the hydrogen storage capacity in high-pressure hydrogen cannot be maintained. Moreover, in the case where the spaces between the molecular layers are maintained by inserting a foreign object other than a carbon atom between the molecular layers, the spaces between the molecular layers become unstable by pressure and heat, and the hydrogen storage capacity cannot be maintained. The hydrogen storage material according to the first embodiment of the present invention includes the protrusions protruding by lengths of not more than the interlayer distances of adjacent molecular layers from the atomic planes of the adjacent molecular layers, and the protrusions are bonded to the atomic planes by bonds selected from a group consisting of covalent bonds, ionic bonds, and metallic bonds and maintains spaces between the molecular layers. It is therefore possible to prevent spaces between the molecular layers from being crushed by pressure and heat and maintain the storage regions which are formed between the molecular layers and store hydrogen, thus increasing the hydrogen storage capacity.

Preferably, as shown in FIG. 2, this hydrogen storage material includes a substitutional atom substituted for a carbon atom. More preferably, some of the carbon atoms constituting six-membered rings which are indicated by $X_1$ to $X_5$ and $Y_1$ to $Y_5$ in FIG. 2 are substituted with nitrogen or boron atoms. Moreover, the hydrogen storage material may include a molecular layer where each six-membered ring is composed of only carbon atoms. In this hydrogen storage material, since the molecular layers include a substitutional atom which is a different atom substituted for a carbon atom, the spacing between the molecular layers can be held in a structurally more stable manner. The hydrogen storage regions can be maintained, and the hydrogen storage capacity in high-pressure hydrogen is increased.

Preferably, each protrusion is composed of a molecular chain. The molecular chain is preferably a polymer formed of a series of organic monomers, and the organic monomers are preferably selected from ethylene, styrene, isoprene, and 1,3-butadiene. Such a constitution allows the spaces between the molecular layers to be properly maintained and allows hydrogen storage regions effective on hydrogen adsorbing to be defined between the molecular layers. Accordingly, the hydrogen storage capacity per unit mass of the hydrogen storage material can be increased.

As for the protrusions, preferably, the number of the protrusions Pr protruding from the upper and lower surfaces of a certain molecular layer L per unit area, that is, an area density is not higher than $0.01 \times 10^{20}$ /$m^2$ and more preferably, not higher than $0.006 \times 10^{20}$ /$m^2$. When the area density exceeds $0.01 \times 10^{20}$ /$m^2$, the hydrogen storage capacity is reduced.

The distance between the molecular layers being 0.7 to 2. 0 nm is effective on increasing an amount of adsorbed hydrogen per unit mass of the material. Preferably, the distance between the molecular layers is 0.8 to 1.6 nm, which is effective on increasing the amount of adsorbed hydrogen per unit mass of the material. More preferably, the distance between the molecular layers is 0.8 to 1.0 nm, which is effective on increasing the amount of adsorbed hydrogen per unit mass of the material.

Employing the above-described constitution allows the hydrogen storage material and structure according to the first embodiment of the present invention to store hydrogen within the hydrogen storage regions at high density even in high-pressure hydrogen, thus increasing the hydrogen storage capacities per unit mass and per unit volume of the hydrogen storage material.

Second Embodiment

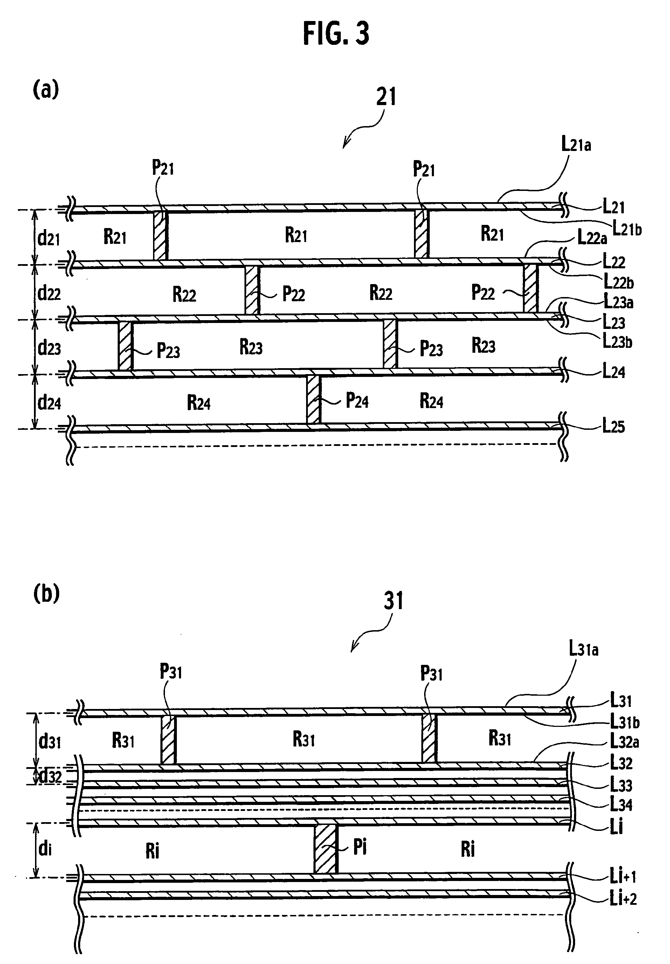

FIGS. 3a and 3b show schematic cross-sectional views of a hydrogen storage material 21 according to a second embodiment of the present invention and a hydrogen storage material 31 according to a modification of the second embodiment, respectively. The hydrogen storage material 21 includes a plurality of molecular layers $L_{21}$ to $L_{25}$ and joints $P_{21}$ to $P_{24}$. The molecular layers $L_{21}$ to $L_{25}$ are stacked on one another in parallel, and, as shown in FIG. 2, each layer is mainly composed of a plurality of six-membered rings having carbon atoms. The joints $P_{21}$ to $P_{24}$ chemically bond atomic planes of adjacent molecular layers at discrete positions to define hydrogen storage regions $R_{21}$ to $R_{24}$ between the molecular layers. For example, as shown in FIG. 3(a), an atomic plane $L_{21b}$ of the molecular layer $L_{21}$ as a first layer and an atomic plane $L_{22a}$ of the molecular layer $L_{22}$ as a second layer are cross-linked by the joints P21 with a length equal to the interlayer distance between the molecular layers $L_{21}$ and $L_{22}$ to define the hydrogen storage regions $R_{21}$ storing hydrogen between the molecular layers $L_{21}$ and $L_{22}$. In a similar manner, an atomic plane $L_{22b}$ of the molecular layer $L_{22}$ as the second molecular layer and an atomic plane $L_{23a}$ as a third molecular layer of the molecular layer $L_{23}$ are cross-linked by the joints P22 to define the hydrogen storage regions $R_{22}$ storing hydrogen between the molecular layers $L_{22}$ and $L_{23}$. Since the molecular layers $L_{21}$ to $L_{25}$ are stacked on one another in parallel, the hydrogen storage regions $R_{21}$ to $R_{24}$ are hierarchically arranged.

The hydrogen storage material and structure according to the second embodiment of the present invention is constituted as described above and therefore can secure spaces capable of structurally adsorbing hydrogen between the molecular layers and maintain the spaces even in high-pressure hydrogen. Accordingly, it is possible to store hydrogen within the hydrogen storage material at high density even in high-pressure hydrogen. Moreover, the chemical bonding of the molecular layers prevents the storage regions storing hydrogen from being broken by moisture and heat. Accordingly, the storage regions storing hydrogen can be maintained, and the hydrogen capacities per unit mass and unit volume of the hydrogen storage material are increased.

Such a hydrogen storage region is not necessarily formed between every pair of adjacent molecular layers. For example, as shown in FIG. 3(b), the hydrogen storage material 31 according to the modification of the second embodiment includes joints $P_{31}$ which cross-link an atomic plane $L_{31b}$ of the molecular layer $L_{31}$ and an atomic plane $L_{32a}$ of the molecular layer $L_{32}$ to define hydrogen storage regions $R_{31}$ storing hydrogen between molecular layers $L_{31}$ and $L_{32}$ and includes no joints between each pair of adjacent ones of molecular layers $L_{32}$ to $L_i$. The hydrogen storage material 31 may include a pair of adjacent molecular layers between which the hydrogen storage region is not formed.

Preferably, the bonds which chemically bond atomic planes of adjacent molecular layers at discrete positions are ones selected from covalent bonds, ionic bonds, and metallic bonds. Generally, in graphite, molecular layers constituting graphite are bonded by intermolecular force. Since the bonds by intermolecular force are weak, just increasing the spacing between the molecular layers allows spaces between the molecular layers to be easily crushed n high pressure hydrogen before hydrogen enters between the molecular layers, and the hydrogen storage capacity in high-pressure hydrogen cannot be maintained. In the case where spaces between the molecular layers are maintained by inserting a foreign object other than a carbon atom between the molecular layers, the spacing between the molecular layers becomes unstable by pressure and heat, and the hydrogen storage capacity cannot be maintained. On the other hand, in the case where the molecular layers are bonded by bonds selected from covalent bonds, ionic bonds, and metallic bonds in addition to the intermolecular force, the spaces between the molecular layers are not crushed by pressure and heat, and the storage regions which are formed between the molecular layers can be maintained, thus increasing the hydrogen storage capacity.

Preferably, this hydrogen storage material includes a substitutional atom substituted for a carbon atom. More preferably, some of the carbon atoms constituting six-membered rings which are indicated by $X_1$ to $X_5$ and $Y_1$ to $Y_5$ in FIG. 2 are substituted with nitrogen or boron atoms. Moreover, the hydrogen storage material may include a molecular layer where each six-membered ring is composed of only carbon atoms. In this hydrogen storage material, since the molecular layers include substitutional atoms which are different atoms substituted for carbon atoms, the molecular layers can be bonded in a structurally more stable manner. Accordingly, the hydrogen storage regions can be maintained, and the storage hydrogen capacity in high-pressure hydrogen is increased.

Preferably, each joint is composed of a molecular chain. The molecular chain is preferably a polymer formed of a series of organic monomers, and the organic monomers are preferably selected from ethylene, styrene, isoprene, and 1,3-butadiene. Such a constitution allows the interlayer distance between the molecular layers to be properly maintained and allows hydrogen storage regions hydrogen adsorption to be defined between molecular layers. Accordingly, the hydrogen storage capacity per unit mass of the hydrogen storage material is increased.

With regard to the joints, preferably, the number of the joints P protruding from the upper and lower surfaces of a certain molecular layer L per unit area, that is, an area density is not higher than $0.01 \times 10^{20}$ /m$^2$ and more preferably, not higher than $0.006 \times 10^{20}$ /m$^2$. When the area density exceeds $0.01 \times 10^{20}$ /m$^2$, the hydrogen storage capacity is reduced.

The distance between the molecular layers being 0.7 to 2.0 nm is effective on increasing an amount of adsorbed hydrogen per unit mass of the material. Preferably, the distance between the molecular layers is 0.8 to 1.6 nm, which is effective on increasing the amount of adsorbed hydrogen per unit mass of the material. More preferably, the distance between the molecular layers is 0.8 to 1.0 nm, which is effective on increasing the amount of adsorbed hydrogen per unit mass of the material.

Employing the above-described constitution allows the hydrogen storage material and structure according to the second embodiment of the present invention to store hydrogen in the hydrogen storage regions at high density even in high-pressure hydrogen, thus increasing the hydrogen storage capacities per unit mass and per unit volume of the hydrogen storage material.

Third Embodiment

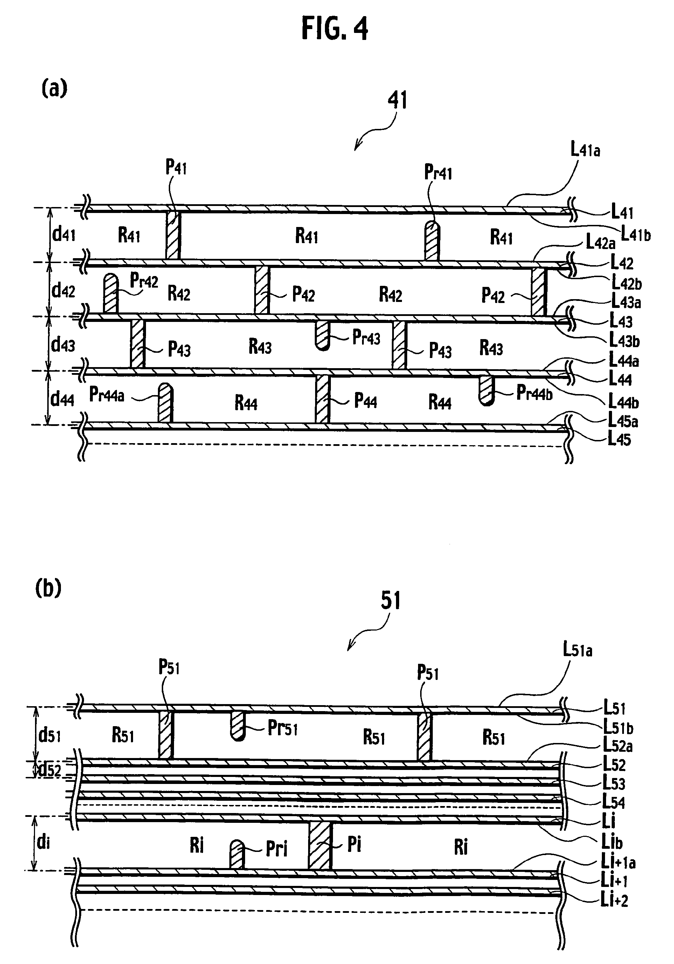

FIGS. 4a and 4b show schematic cross-sectional views of a hydrogen storage material 41 according to a third embodiment of the present invention and a hydrogen storage material 51 according to a modification of the third embodiment, respectively. The hydrogen storage material 41 includes a plurality of molecular layers $L_{41}$ to $L_{45}$, protrusions $Pr_{41}$ to $Pr_{44}$, and joints $P_{41}$ to $P_{44}$. The molecular layers $L_1$ to $L_5$ are stacked on one another in parallel, as shown in FIG. 2, each of which is mainly composed of six-membered rings having carbon atoms. The protrusions $Pr_{41}$ to $Pr_{44}$ are composed of molecular chains protruding by lengths of not more than the interlayer distances between adjacent molecular layers from atomic planes of the adjacent molecular layers. The joints $P_{41}$ to $P_{44}$ chemically bond atomic planes of adjacent molecular layers at discrete positions. The protrusions $Pr_{41}$ to $Pr_{44}$ and joints $P_{41}$ to $P_{44}$ define hydrogen storage regions $R_{41}$ to $R_{44}$ between the molecular layers. For example, as shown in FIG. 4(a), the protrusion $Pr_{41}$ and the joint $P_{41}$ define the hydrogen storage regions $R_{41}$ storing hydrogen a between the molecular layers $L_{41}$ and $L_{42}$, which are first and second molecular layers, respectively. The protrusion $Pr_{41}$ has a length of not more than an interlayer distance $d_{41}$ between the molecular layers $L_{41}$ and $L_{42}$, which are the first and second molecular layers, from the atomic layer $L_{42a}$ of the molecular layer $L_{42}$ to an atomic layer $L_{41b}$ of the molecular layer $L_{41}$. The joint $P_{41}$ with a length equal to the interlayer distance $d_{41}$ between the molecular layers $L_{41}$ and $L_{42}$ cross-links the atomic plane $L_{41b}$ of the molecular layer $L_{41}$ and the atomic plane $L_{42a}$ of the molecular layer $L_{42}$. In a similar manner, the protrusions $Pr_{44a}$ and $Pr_{44b}$ and the joint $P_{44}$ define the hydrogen storage regions $R_{44}$ storing hydrogen between the molecular layers $L_{44}$ and $L_{45}$, which are fourth and fifth molecular layers, respectively. The protrusion $Pr_{44a}$ has a length of not more than an interlayer distance $d_{44}$ between the molecular layers $L_{44}$ and $L_{45}$ from an atomic layer $L_{45a}$ of the molecular layer $L_{45}$ to an atomic layer $L_{44b}$ of the molecular layer $L_{44}$. The protrusion $Pr_{44b}$ has a length of not more than an interlayer distance $d_{44}$ between the molecular layers $L_{44}$ and $L_{45}$ from the atomic layer $L_{44b}$ of the molecular layer $L_{44}$ to the atomic layer $L_{45a}$ of the molecular layer $L_{45}$. The joint $P_{44}$ with a length equal to the interlayer distance $d_{44}$ between the molecular layers $L_{44}$ and $L_{45}$ cross-links the atomic plane $L_{44b}$ of the molecular layer $L_{44}$ and the atomic plane $L_{45a}$ of the molecular layer $L_{45}$. Since the molecular layers $L_{41}$ to $L_{44}$ are stacked on one another in parallel, the hydrogen storage regions $R_{41}$ to $R_{44}$ are hierarchically arranged.

The hydrogen storage material and structure according to the third embodiment of the present invention is constituted as described above and therefore can secure spaces capable of structurally adsorbing hydrogen between the molecular layers and maintain the spaces even in high-pressure hydrogen. Accordingly, it is possible to store hydrogen within the hydrogen storage material at high density even in high-pressure hydrogen. Moreover, the chemical bonding of the molecular layers prevents the storage regions storing hydrogen from being broken by moisture and heat. The storage regions storing hydrogen can be therefore maintained, and the hydrogen capacities per unit mass and unit volume of the hydrogen storage material are increased.

Such a hydrogen storage region is not necessarily formed between every pair of adjacent molecular layers. For example, as shown in FIG. 4(b), the hydrogen storage material 51 according to the modification of the third embodiment includes a protrusion $Pr_{51}$ having a length of not more than an interlayer distance $d_{51}$ of the molecular layers $L_{51}$ and $L_{52}$ from an atomic plane $L1_{5b}$ of the molecular layer $L_{51}$ to an atomic plane $L1_{52a}$ of the molecular layer $L_{52}$ and joints $P_{51}$ which cross-link the atomic plane $L_{51b}$ of the molecular layer $L_{51}$ and the atomic plane $L_{52a}$ of the molecular layer $L_{52}$ to define storage regions $R_{51}$ capable of storing hydrogen between molecular layers $L_{51}$ and $L_{52}$ and includes no joints between each pair of adjacent ones of molecular layers $L_{52}$ to $L_i$. The hydrogen storage material 51 may include a pair of adjacent molecular layers between which the hydrogen storage region is not formed.

Preferably, the protrusions are bonded to atomic planes by bonds selected from a covalent bond, an ionic bond, and a metallic bond. The bonds which chemically bond atomic planes of adjacent molecular layers at discrete positions are preferably selected from covalent bonds, ionic bonds, and metallic bonds. It is preferable that this hydrogen storage material includes a substitutional atom substituted for a carbon atom. More preferably, some of the carbon atoms constituting six-membered rings are substituted with nitrogen or boron atoms. Moreover, the hydrogen storage material may include a molecular layer in which each six-membered ring is composed of only carbon atoms.

Preferably, each of the protrusions and joints is composed of a molecular chain. The molecular chain is preferably a polymer formed of a series of organic monomers, and the organic monomers are preferably selected from ethylene, styrene, isoprene, and 1,3-butadiene. Preferably, the total number of the protrusions Pr and joints P protruding from the upper and lower surfaces of a certain molecular layer L per unit area, that is, an area density is not higher than $0.01 \times 10^{20}$ /m$^2$ and more preferably, not higher than $0.006 \times 10^{20}$ /m$^2$. When the area density exceeds $0.01 \times 10^{20}$ /m$^2$, the hydrogen storage capacity is reduced.

The interlayer distance between the molecular layers being 0.7 to 2.0 nm is effective on increasing an amount of adsorbed hydrogen per unit mass of the material. Preferably, the interlayer distance between the molecular layers is 0.8 to 1. 6 nm, which is effective on increasing the amount of adsorbed hydrogen per unit mass of the material. More preferably, the interlayer distance between the molecular layers is 0.8 to 1.0 nm, which is effective on increasing the amount of adsorbed hydrogen per unit mass of the material.

Employing the above-described constitution allows the hydrogen storage material and structure according to the third embodiment of the present invention to store hydrogen in the hydrogen storage regions at high density even in high-pressure hydrogen, thus increasing the hydrogen storage capacities per unit mass and per unit volume of the hydrogen storage material.

Fourth Embodiment

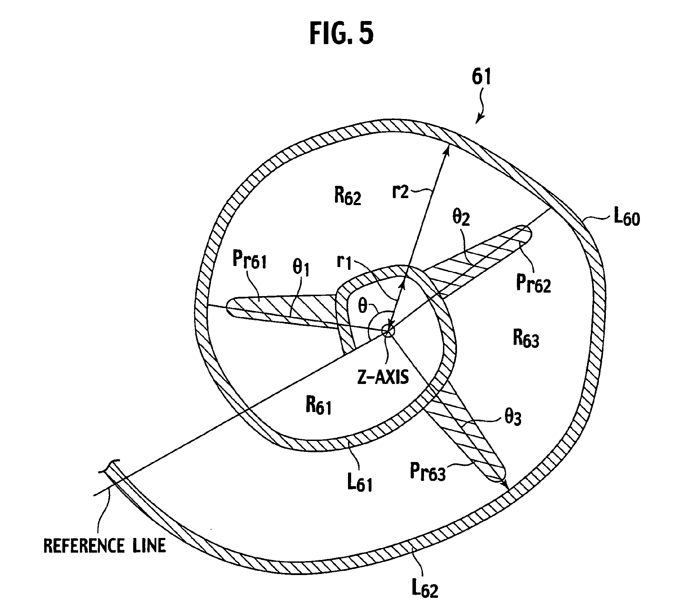

FIG. 5 is a schematic cross-sectional view of a hydrogen storage material 61 according to a fourth embodiment of the present invention. The hydrogen storage material 61 is composed of a molecular layer $L_{60}$ rolled in a spiral and protrusions $Pr_{61}$ to $Pr_{63}$. The molecular layer $L_{60}$ is formed of a plurality of connected six-membered rings, most of which include carbon atoms as shown in FIG. 2.

The protrusions $Pr_{61}$ to $Pr_{63}$ protrude by lengths of not more than distance between adjacent layer sections of the molecular layer $L_{60}$ rolled in a spiral to increase spacing between the molecular layer sections and define hydrogen storage regions (expanded portions) $R_{61}$ to $R_{63}$ capable of storing hydrogen. Based on Z-R-$\theta$ cylindrical coordinates with a Z axis at the center of the spiral, a distance $d_n(\theta)$ between adjacent layer sections satisfies the following equation (1).

$$d_n(\theta) = r_{n+1}(\theta+2\pi n) - r_n(\theta+2\pi(n-1)) \qquad ...\text{Equation (1)}$$

Considering the case of n=1, the protrusions $Pr_{61}$ to $Pr_{63}$ protruding from a first layer section $L_{61}$ of the molecular layer $L_{60}$ have lengths shorter than distance $d_1(\theta)$ between the first layer section $L_{61}$ and a second layer section $L_{62}$ and satisfy Equation (2).

$$d_1(\theta) = r_2 - r_1 = r_2(\theta+2\pi) - r_1(\theta) \qquad ...\text{Equation (2)}$$

In FIG. 5, the protrusions $Pr_{61}$ to $Pr_{63}$ respectively have angles $\theta_1$ to $\theta_3$ from respective reference lines. The angles $\theta_1$ to $\theta_3$ may be the same along the Z-axis direction of the molecular layer $L_{60}$ or arbitrarily changed as a function of Z coordinate.

The hydrogen storage material and structure according to the fourth embodiment of the present invention is constituted as described above and therefore can secure spaces capable of structurally adsorbing hydrogen between the molecular layers and maintain the spaces even in high-pressure hydrogen. Accordingly, it is possible to store hydrogen within the hydrogen storage material at high density even in high-pressure hydrogen. Moreover, the protrusions prevent the storage regions storing hydrogen from being broken by moisture and heat. The storage regions storing hydrogen can be therefore maintained, and the hydrogen capacities per unit mass and unit volume of the hydrogen storage material are increased.

Preferably, the protrusions $Pr_{61}$ to $Pr_{63}$ are bonded to the molecular layers $L_{60}$ by bonds selected from covalent bonds, ionic bonds, and metallic bonds. Preferably, the hydrogen storage material 61 includes a substitutional atom substituted for a carbon atom. More preferably, some of the carbon atoms constituting six-membered rings are substituted with nitrogen or boron atoms. Moreover, the hydrogen storage material may include a molecular layer in which each six-membered ring is composed of only carbon atoms.

Preferably, each of the protrusions $Pr_{61}$ to $Pr_{63}$ is composed of a molecular chain. The molecular chain is preferably a polymer formed of a series of organic monomers, and the organic monomers are preferably selected from ethylene, styrene, isoprene, and 1,3-butadiene. Preferably, the total number of the protrusions Pr protruding from the upper and lower surfaces of the molecular layer $L_{60}$ per unit area, that is, an area density is not higher than $0.01 \times 10^{20}$ /m$^2$ and more preferably, not higher than $0.006 \times 10^{20}$ /m$^2$. When the area density exceeds $0.01 \times 10^{20}$ /m$^2$, the hydrogen

storage capacity is reduced.

The interlayer distance between the molecular layers being 0.7 to 2.0 nm is effective on increasing an amount of adsorbed hydrogen per unit mass of the material. Preferably, the interlayer distance between the molecular layers is 0.8 to 1.6 nm, which is effective on increasing the amount of adsorbed hydrogen per unit mass of the material. More preferably, the interlayer distance between the molecular layers is 0.8 to 1.0 nm, which is effective on increasing the amount of adsorbed hydrogen per unit mass of the material.

Employing the above-described constitution allows the hydrogen storage material and structure according to the fourth embodiment of the present invention to store hydrogen in the hydrogen storage regions at high density even in high-pressure hydrogen, thus increasing the hydrogen storage capacities per unit mass and per unit volume of the hydrogen storage material.

(Manufacturing Method of Hydrogen Storage Material)

Next, a description is given of a mode of a method of manufacturing a hydrogen storage material according to the embodiments of the present invention. The method of manufacturing a hydrogen storage material includes: an insertion step of inserting a foreign molecule between adjacent ones of molecular layers to provide an expanded portion between the adjacent molecular layers, the molecular layers being stacked on one another and mainly composed of six-membered rings having carbon atoms; and a protrusion forming step of forming a protrusion protruding by a length of not more than an interlayer distance between the adjacent molecular layers from an atomic plane toward the other atomic plane of the adjacent molecular layers. In this method of manufacturing a hydrogen storage material, the protrusions protruding by lengths of not more than the interlayer distance between the adjacent molecular layers from the atomic planes of the adjacent molecular layers are formed in space between the molecular layers which is expanded by the insertion step. It is therefore possible to easily manufacture a hydrogen storage material with high hydrogen storage capacity including: molecular layers which are stacked on one another in parallel and mainly composed of six-membered rings having carbon atoms; and protrusions protruding by lengths of not more than an interlayer distance between adjacent molecular layers from atomic planes of the adjacent molecular layers.

The insertion step to provide the expanded portion between the molecular layers is carried out by inserting metal atoms or volatile molecules between the molecular layers. When the metal atoms are inserted between the molecular layers, the metal atoms promote an increase in spacing between the molecular layers and bonding of the molecular layers. Accordingly, the metal atoms are preferably alkali metal atoms. Especially cesium or potassium is preferably used. On the other hand, when volatile molecules are inserted between molecular layers, the increase in spacing between the molecular layers is conducted by energy generated by elimination of the inserted volatile molecules. Accordingly, it is preferable that, after the insertion of the volatile molecules, the method of manufacturing a hydrogen storage material includes a heating step of heating the molecular layers between which the volatile molecules are inserted. Preferably, the heating step is conducted in an inert gas atmosphere under conditions of 300 to 500°C. As the inert gas, gas not including oxidation gas which reacts with the material is preferred, and in addition to noble gas, nitrogen gas can be also used. In this heating step, processing time in a heating temperature range is preferably not more than 1 hour. Moreover, it is preferable that the inserted volatile molecules are acid molecules for easy insertion between the molecular layers and rapid evaporation and elimination. Furthermore, for easy insertion and easy control of evaporation, the acid molecules are preferably a mixture of any one or more of sulfuric acid, nitric acid, hydrochloric acid, perchloric acid, hydrogen peroxide, and phosphoric acid. Moreover, it is preferable that the carbon material as a raw material in which the metal atoms or volatile molecules are inserted is a graphite carbon material having at least one selected from natural graphite, artificial graphite, kish graphite, and mesophase pitch-based graphite because each of these materials has a fine structure including stacked molecular layers each of which is mainly composed of six-membered rings having carbon atoms.

The aforementioned protrusion forming step is implemented by, for example, introducing organic monomers between the molecular layers to react atoms constituting the molecular layers with the organic monomers between the molecular layers. In the case of using metal atoms in the insertion step, choice of metal atoms having a catalytic effect promotes reaction of the organic monomers and the atoms constituting the molecular layers or reaction of the organic monomers to realize more rapid chemical bonding between the molecular layers. Preferably, the organic monomers are selected from ethylene, styrene, isoprene, and 1,3-butadiene.

In the case of using metal atoms for increasing the spacing between the molecular layers, conducting a step of removing the metal atoms used in the insertion step after the molecular layers are chemically bonded can provide larger hydrogen storage regions. Such removal of the metal atoms is performed by leaving the material in the air or adding moisture thereto.

Furthermore, preferably, the manufacturing method includes a substitution step of substituting some of the carbon atoms of the molecular layers with nitrogen or boron atoms before the insertion step. Substituting some of the carbon atoms of the molecular layers with nitrogen or boron atoms makes the chemical bonds between the molecular layers stronger.

Moreover, another mode of the method of manufacturing a hydrogen storage material according to the embodiments of the present invention includes: an insertion step of inserting a foreign molecule between adjacent ones of molecular layers to provide an expanded portion between the adjacent molecular layers, the molecular layers being stacked on one another and mainly composed of six-membered rings having carbon atoms; and a bonding step of chemically bonding at discrete positions the molecular layers between which the foreign molecule is inserted. In this method of manufacturing the hydrogen storage materials, in order to chemically cross-link at discrete positions a molecular layer and a molecular layer adjacent thereto which are stacked on one another in parallel and mainly composed of six-membered rings having carbon atoms, the adjacent molecular layers are chemically bonded after the spacing between the adjacent molecular layers is increased. Accordingly, it is possible to easily manufacture the hydrogen storage material with a high hydrogen storage capacity including: molecular layers which are stacked on one another in parallel and mainly composed of six-membered rings having carbon atoms: and joints chemically bond atomic planes of the adjacent molecular layers at discrete positions.

The insertion step to provide the expanded portion between the molecular layers is carried out by inserting metal atoms or volatile molecules between the molecular layers. When the metal atoms are inserted between the molecular layers, the metal atoms promote an increase in spacing between the molecular layers and bonding of the molecular layers. Accordingly, the metal atoms are preferably alkali metal atoms. Especially cesium or potassium is preferably used. On the other hand, when volatile molecules are inserted between the molecular layers, the increase in spacing between the molecular layers is conducted by energy generated by elimination of the inserted volatile molecules. Accordingly, it is preferable that, after the insertion of the volatile molecules, the method of manufacturing a hydrogen storage material includes a heating step of heating the molecular layers between which the volatile molecules are inserted. Preferably, the heating step is conducted in an inert gas atmosphere under conditions of 300 to 500°C. As the inert gas, gas not having oxidation gas which reacts with the material is preferred, and in addition to noble gas, nitrogen gas can be also used. In this heating step, processing time in a heating temperature range is preferably not more than 1 hour. Moreover, it is preferable that the inserted volatile molecules are acid molecules for easy insertion between the molecular layers and rapid evaporation and elimination thereof. Furthermore, for easy insertion and easy control of evaporation, the acid molecules are preferably a mixture of one or more of sulfuric acid, nitric acid, hydrochloric acid, perchloric acid, hydrogen peroxide, and phosphoric acid. Moreover, it is preferable that the carbon material as a raw material in which the metal atoms or volatile molecules are inserted is a graphite carbon material having at least one selected from natural graphite, artificial graphite, kish graphite, and mesophase pitch-based graphite because each of these materials has a fine structure including molecular layers mainly composed of six-membered rings having carbon atoms.

The aforementioned bonding step is implemented by, for example, introducing organic monomers between the molecular layers to react atoms constituting the molecular layers with the organic monomers between the molecular layers. In the case of using metal atoms in the insertion step, choice of metal atoms having a catalytic effect promotes reaction of the organic monomers and the atoms constituting the molecular layers or reaction of the organic monomers to realize more rapid chemical bonding between the molecular layers. Preferably, the organic monomers are selected from ethylene, styrene, isoprene, and 1,3-butadiene.

In the case of using metal atoms for increasing the spacing between the molecular layers, conducting a step of removing the metal atoms used in the insertion step after the molecular layers are chemically bonded can provide larger hydrogen storage regions. Such removal of the metal atoms is performed by leaving the material in the air or adding moisture thereto.

Furthermore, preferably, the manufacturing method includes a substitution step of substituting some of the carbon atoms of the molecular layers with nitrogen or boron atoms before the insertion step. Substituting some of the carbon atoms of the molecular layers with nitrogen or boron atoms makes the chemical bonds between the molecular layers stronger.

According to the manufacturing method of a hydrogen storage material according to the embodiment of the present invention, as described above, it is possible to easily obtain a hydrogen storage material with high hydrogen storage capacity.

(Hydrogen Storage and Hydrogen Storage Apparatus)

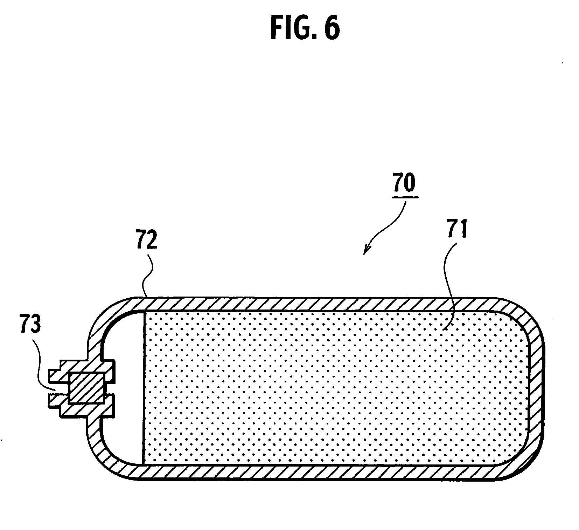

FIG. 6 shows a hydrogen storage 71 and a hydrogen storage apparatus 70 for vehicles according to the embodiments of the present invention. This hydrogen storage apparatus 70 includes the hydrogen storage 71 encapsulated within a pressure vessel 72 provided with a hydrogen outlet 73. The hydrogen storage 71 is composed of the above-described hydrogen storage material solidified or formed into a thin film by pressing. The thus-structured hydrogen storage apparatus 70 can be mounted on a vehicle and incorporated in a fuel cell system or hydrogen engine system for use. The vessel may have a shape with ribs or columns inside, in addition to the shape composed of a simple closed space. Preferably, the raw material of the vessel is selected frommaterials having chemical stability and endurance for storage and release of hydrogen, such as aluminum, stainless, and carbon structural materials. Furthermore, arranging a heat exchanger inside the container can contribute to the speed and efficiency in storing and releasing hydrogen. Such a constitution allows the hydrogen storage apparatus to have high hydrogen storage capacity. Moreover, the hydrogen storage apparatus can be reduced in size and weight. Mounting such a hydrogen storage apparatus on a vehicle, therefore, requires less space for installation and can reduce the vehicle weight. The pressing of the hydrogen storage may be performed either before or while filling the pressure tank with hydrogen.

(Fuel Cell Vehicle)

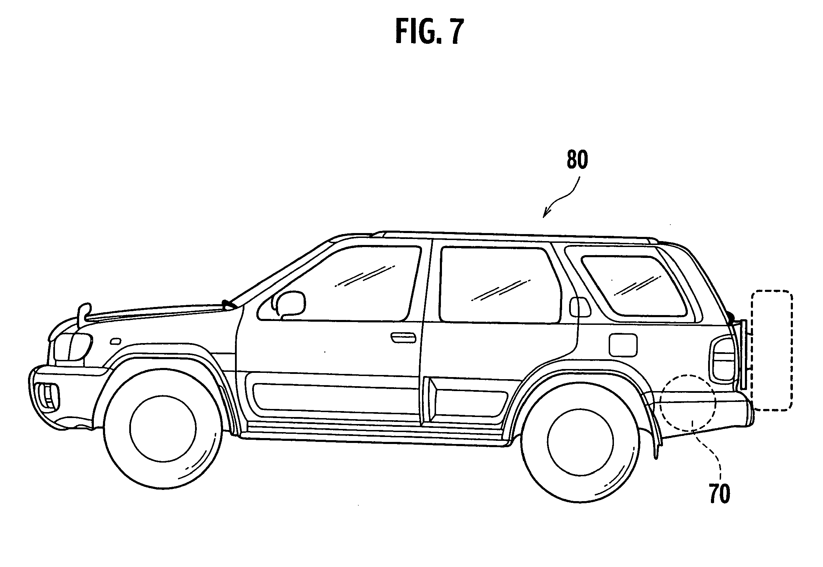

FIG. 7 shows a hydrogen fuel vehicle including the hydrogen storage apparatus 70 according to the embodiments of the present invention, in which the hydrogen storage apparatus 70 shown in FIG. 6 is mounted on a hydrogen fuel vehicle 80. At this time, the hydrogen storage apparatus 70 mounted on a vehicle may be one or divided into two or more, and the plurality of hydrogen storage apparatuses may have different shapes. Moreover, the hydrogen storage apparatus 70 may be placed inside the vehicle, such as in an engine room, a trunk room, or a floor section under a seat and may be placed outside the vehicle such as on a roof. Such a vehicle has weight reduced and improved fuel consumption, thus extending maximum travel distance. Moreover, the hydrogen storage apparatus is reduced in volume, increasing available space in the vehicle compartment.

**Examples**

Hereinafter, a description is given of examples of the hydrogen storage materials according to the embodiment of the present invention.
First, Examples 1 to 12 are described.

<Preparation of Samples>

Example 1

As a raw material, high crystalline 2% boron-2% nitrogen doped graphite was used. The graphite was subjected to vacuum degassing at 400°C for 24 hours to remove molecules attached to surfaces and then well mixed with metallic cesium, followed by heating at 450°C for five days. The thus-obtained product was evacuated, treated with ethylene gas at 50°C for 24 hours, and then water-washed for 24 hours followed by filtering and drying to obtain a sample of Example 1.

Example 2

A sample of Example 2 was prepared in the same manner as that of Example 1 except that styrene vapor was used instead of ethylene gas.

Example 3

As a raw material, high crystalline 2% boron-2% nitrogen doped graphite was used. This graphite was subjected to vacuum degassing at 300°C for 12 hours to remove molecules attached to surfaces and then put into a 90% concentrated sulfuric acid-10% concentrated nitric acid solution prepared at 100°C. Thereafter, the mixture was stirred for about 12 hours and washed with pure water, followed by drying to prepare a graphite intercalation compound with sulfuric acid molecules remaining between layers. Thereafter, the compound was slowly heated (100°C/hour) in a nitrogen atmosphere and then heated at 300 to 500°C for two hours. Subsequently, the compound was subjected to vacuum degassing at 400°C for 24 hours to remove molecules attached to the surfaces and then treated with ethylene gas at 50°C for four hours to obtain a sample of Example 3.

Example 4

A sample of Example 4 was prepared in the same manner as that of Example 3 except that styrene vapor was used instead of ethylene gas.

Example 5

A sample of Example 5 was prepared in the same manner as that of Example 1 except that high crystalline 1% boron-1% nitrogen doped graphite was used as the raw material instead of high crystalline 2% boron-2% nitrogen doped graphite.

Example 6

A sample of Example 6 was prepared in the same manner as that of Example 2 except that high crystalline graphite with 1% boron and 1% nitrogen was used as the raw material instead of high crystalline graphite with 2% boron and 2% nitrogen.

Example 7

A sample of Example 7 was prepared in the same manner as that of Example 3 except that high crystalline 1% boron-1% nitrogen doped graphite was used as the raw material instead of high crystalline 2% boron-2% nitrogen doped graphite.

Example 8

A sample of Example 8 was prepared in the same manner as that of Example 4 except that high crystalline 1% boron-1% nitrogen doped graphite was used as the raw material instead of high crystalline 2% boron-2% nitrogen doped graphite.

Example 9

A sample of Example 9 was prepared in the same manner as that of Example 1 except that highly-oriented pylorytic graphite with high crystalline quality was used as the raw material instead of high crystalline 2% boron-2% nitrogen doped graphite.

Example 10

A sample of Example 10 was prepared in the same manner as that of Example 2 except that highly-oriented pylorytic graphite with high crystalline quality was used as the raw material instead of high crystalline 2% boron-2% nitrogen doped graphite.

Example 11

A sample of Example 11 was prepared in the same manner as that of Example 3 except that highly-oriented pylorytic graphite with high crystalline quality was used as the raw material instead of high crystalline 2% boron-2% nitrogen doped graphite.

Example 12

A sample of Example 12 was prepared in the same manner as that of Example 4 except that highly-oriented pylorytic graphite with high crystalline quality was used as the raw material instead of high crystalline 2% boron-2% nitrogen doped graphite.

<Sample Observation>

Sample observation was performed using a transmission electron microscope (hereinafter, referred to as a TEM). The sample powder was dispersed in an acetone solution, and the dispersion solution was dropped onto a Cu mesh grid and dried to obtain each sample for observation.

<Measurement of Interlayer Distance of Hydrogen Storage Material>

The interlayer distance between carbon planes in a structure was measured by powder X-ray diffraction (hereinafter, referred to as XRD). The incident X-rays were CuKα rays, and the interlayer distance was calculated based on obtained diffraction patterns.

<Measurement of Hydrogen Storage Capacity of Hydrogen Storage Material>

After being weighed, each sample was put into a pressure sample tube for measurement at a pressure of 4.9 MPa and vacuum-treated at room temperature for a day. The hydrogen pressure was then increased to 12 MPa, and the amount of hydrogen stored was checked. Thereafter, the hydrogen pressure was reduced to the atmospheric pressure, and the amount of hydrogen released was checked.

Tables 1 to 3 show the raw materials, intercalated foreign molecules, introduced gases, interlayer distance, and hydrogen storage capacity per unit mass of Examples 1 to 12.

[Table 1]

|  | Example 1 | Example 2 | Example 3 | Example 4 |
|---|---|---|---|---|
| Raw Material | 2%B-2%N doped graphite | 2%B-2%N doped graphite | 2%B-2%N doped graphite | 2%B-2%N doped graphite |
| Intercalated foreign molecule | Metallic cesium | Metallic cesium | Concentrated sulfuric acid | Concentrated sulfuric acid |
| Introduced gas | Ethylene gas | Styrene gas | Ethylene gas | Styrene gas |
| Interlayer distance (nm) | 0.83 | 0.90 | 0.33 & 0.26 | 0.33 & 0.30 |
| Hydrogen storage capacity per unit mass (wt%) | 1.0 | 1.1 | 1.4 | 1.1 |

Table 2

| | Example 5 | Example 6 | Example 7 | Example 8 |
|---|---|---|---|---|
| Raw Material | 1%B-1%N doped graphite | 1%B-1%N doped graphite | 1%B-1%N doped graphite | 1%B-1%N doped graphite |
| Intercalated foreign molecule | Metallic cesium | Metallic cesium | Concentrated sulfuric acid | Concentrated sulfuric acid |
| Introduced gas | Ethylene gas | Styrene gas | Ethylene gas | Styrene gas |
| Interlayer distance (nm) | 0.65 | 0.73 | 0.33 & 0.36 | 0.33 & 0.36 |
| Hydrogen storage capacity per unit mass (wt%) | 0.7 | 0.7 | 1.0 | 1.2 |

Table 3

| | Example 5 | Example 6 | Example 7 | Example 8 |
|---|---|---|---|---|
| Raw Material | Highly-oriented pyrolytic graphite | Highly-oriented pyrolytic graphite | Highly-oriented pyrolytic graphite | Highly-oriented pyrolytic graphite |
| Intercalated foreign molecule | Metallic cesium | Metallic cesium | Concentrated sulfuric acid | Concentrated sulfuric acid |
| Introduced gas | Ethylene gas | Styrene gas | Ethylene gas | Styrene gas |
| Interlayer distance (nm) | 0.33 | 0.33 | 0.33 & 0.42 | 0.33 & 0.38 |
| Hydrogen storage capacity per unit mass (wt%) | not more than 0.1 | not more than 0.1 | not more than 0.1 | not more than 0.1 |

In Example 1, the spacing between 2% boron-2% nitrogen doped graphite layers was increased by metallic cesium, and the graphite layers were bonded with ethylene. From the result of XRD, the obtained sample was found to have an interlayer distance of 0.83 nm. It was revealed that the hydrogen storage capacity of the hydrogen storage material obtained in Example 1 reached 1.0 wt%.

In Example 2, the spacing between 2% boron-2% nitrogen doped graphite layers was increased by metallic cesium, and the graphite layers were bonded with styrene. From the result of XRD, the obtained sample was found to have an interlayer distance of 0.9 nm. It was revealed that the hydrogen storage capacity of the hydrogen storage material obtained in Example 2 reached 1.1 wt%.

In Example 3, the spacing between 2% boron-2% nitrogen doped graphite layers was increased by using evaporation and elimination energy of sulfuric acid, which was an inorganic acid, and the graphite layers were bonded with ethylene. From the result of XRD, the obtained sample was found to have interlayer distances of 0.33 and 0.26 nm. It was revealed that the hydrogen storage capacity of the hydrogen storage material obtained in Example 3 reached 1.4 wt%.

In Example 4, the spacing between 2% boron-2% nitrogen doped graphite layers was increased by using evaporation and elimination energy of sulfuric acid, which was an inorganic acid, and the graphite layers were bonded with styrene. From the result of XRD, the obtained sample was found to have interlayer distances of 0.33 and 0.30 nm. It was revealed that the hydrogen storage capacity of the hydrogen storage material obtained in Example 4 reached 1.1 wt%.

In Example 5, the spacing between 1% boron-1% nitrogen doped graphite layers was increased by metallic cesium, and the graphite layers were bonded with ethylene. From the result of XRD, the obtained sample had an interlayer distance of 0. 65 nm, and it was confirmed that the spacing thereof was narrower than that of Example 1. The hydrogen storage capacity of the hydrogen storage material obtained in Example 5 was 0.7 wt%, which was lower than that of Example 1.

In Example 6, the spacing between 1% boron-1% nitrogen doped graphite layers was increased by metallic cesium, and the graphite layers were bonded with styrene. From the result of XRD, the obtained sample had an interlayer distance of 0.73 nm, and it was confirmed that the spacing thereof was narrower than that of Example 2. The hydrogen storage capacity of the hydrogen storage material obtained in Example 6 was 0.7 wt%, which was lower than that of Example 2.

In Example 7, the spacing between 1% boron-1% nitrogen doped graphite layers was increased by using evaporation and elimination energy of sulfuric acid, which was an inorganic acid, and the graphite layers were bonded with ethylene. The obtained sample had interlayer distances of 0.33 and 0.27 nm, and it was confirmed that the spacing thereof was larger than that of Example 3. The hydrogen storage capacity of the hydrogen storage material obtained in Example 7 was 1.0 wt%, which was lower than that of Example 3.

In Example 8, the spacing between 1% boron-1% nitrogen doped graphite layers was increased by using evaporation and elimination energy of sulfuric acid, which was an inorganic acid, and the graphite layers were bonded with styrene. From the result of XRD, the obtained sample had interlayer distances of 0.33 and 0.36 nm, and it was confirmed that the spacing thereof was larger than that of Example 4. The hydrogen storage capacity of the hydrogen storage material obtained in Example 8 was 1.2 wt%, which was higher than that of Example 4.

In Example 9, the spacing between highly-oriented pyrolytic graphite layers was increased by metallic cesium, and ethylene was introduced therebetween. From the result of XRD, the obtained sample had an interlayer distance of 0.33 nm, and it was confirmed that the spacing thereof was narrower than those of Examples 1 and 5. The hydrogen storage capacity thereof was not more than 0.1 wt%, which was lower than that of Examples 1 and 5.

In Example 10, the spacing between highly-oriented pyrolytic graphite layers was increased by metallic cesium, and styrene was introduced therebetween. From the result of XRD, the obtained sample had an interlayer distance of 0.33 nm, and it was confirmed that the spacing thereof was narrower than those of Examples 2 and 6. The hydrogen storage capacity thereof was not more than 0.1 wt%, which was lower than that of Examples 2 and 6.

In Example 11, the spacing between highly-oriented pyrolytic graphite layers was increased by using evaporation and elimination energy of sulfuric acid, which was an inorganic acid, and ethylene was introduced therebetween. From the result of XRD, the obtained sample had interlayer distances of 0.33 and 0.42 nm, and it was confirmed that the spacing thereof was larger than those of Examples 3 and 7. The hydrogen storage capacity thereof was not more than 0. 1 wt%, which was lower than that of Examples 3 and 7.

In Example 12, the spacing between highly-oriented pyrolytic graphite layers was increased by using evaporation and elimination energy of sulfuric acid, which was an inorganic acid, and styrene was introduced therebetween. From the result of XRD, the obtained sample had interlayer distances of 0.33 and 0.38 nm, and it was confirmed that the spacing thereof was larger than that of Examples 4 and 8. The hydrogen storage capacity thereof was not more than 0.1 wt%, which was lower than that of Examples 4 and 8.

The results of Examples 1 to 12 revealed that when the spacing was increased by metallic cesium, there was a tendency that the graphite doped with boron and nitrogen had longer interlayer distance than the highly-oriented pyrolytic graphite had and had higher hydrogen storage capacity. When the spacing was increased with sulfuric acid, there was a tendency that the graphite doped with boron and nitrogen had shorter interlayer distance than the highly-oriented pyrolytic graphite had but had higher hydrogen storage capacity. Moreover, the introduced gas did not make a large difference. Moreover, it was found that there was a tendency that the addition of 2% of boron and nitrogen provided higher hydrogen storage capacity than the addition of 1% of boron and nitrogen provided.

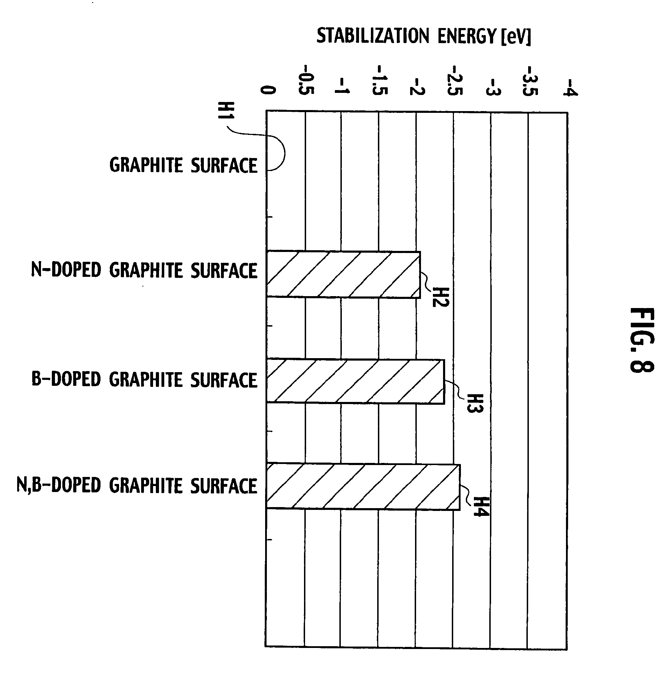

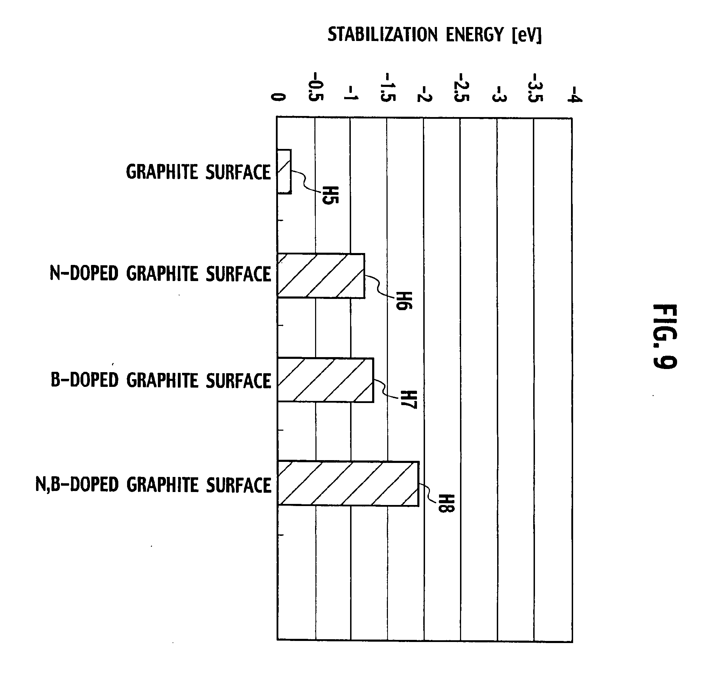

FIG. 8 shows a histogram, showing stabilization energy H1 (reference energy: 0 eV) when an alkyl group is bonded to a surface of graphite, stabilization energy H2 when an alkyl group is bonded to a surface of 2% nitrogen-doped graphite, stabilization energy H3 when an alkyl group is bonded to a surface of 2% boron-doped graphite, and stabilization energy H4 when an alkyl group is bonded to a surface of 2% boron-2% nitrogen doped graphite. FIG. 9 shows stabilization energy H5 when an alkyl group is bonded to a surface of graphite, stabilization energy H6 when an alkyl group is bonded to a surface of 1% nitrogen-doped graphite, stabilization energy H7 when an alkyl groups is bonded to a surface of 1% boron-doped graphite, and stabilization energy H8 when an alkyl group is bonded to a surface of 1% boron-1% nitrogen doped graphite.

H1 to H8 were calculated by first principles calculation which solved the Shrondinger equation of a system for bonding energy when alkyl groups were bonded to each graphite surface to calculate eigenstate wave function and energy. In FIGS. 8 and 9, a larger negative value of the stabilization energy means a stronger bond between the graphite surface and alkyl group.

FIGS. 8 and 9 reveals that the graphite with no boron or nitrogen atoms introduced therein provides a weak bond to an alkyl group but substitutional doping of boron or nitrogen atoms in the graphite allows the graphite layers to be chemically bonded. Comparing FIGS. 8 and 9, graphite substitutionally doped with more boron or nitrogen atoms has lower stabilization energy and provides a stronger bond between the graphite surface and alkyl group. Moreover, as apparent from Tables 1 to 4, the graphite substitutionally doped with more boron or nitrogen atoms has higher hydrogen storage capacity.

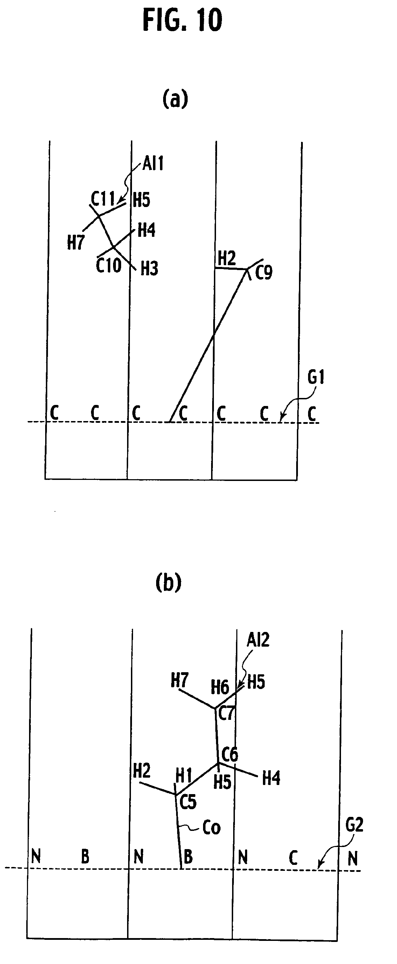

FIG. 10 shows atomic structure model diagrams of the calculation results. FIG. 10(a) shows a case where an alkyl group A11 is introduced to a graphite surface G1. The result obtained when the alkyl group A11 was introduced to the graphite surface G1 was that a bond between the alkyl group A11 and graphite surface G1 could not be maintained and was cut off. On the other hand, the result obtained when an alkyl group was introduced to a graphite surface of graphite doped with boron and nitrogen atoms, as shown in FIG. 10(b), was that a bond Co was formed between a graphite surface G2 and alkyl group A12.

As shown in FIG. 10, in the case of the graphite with no boron or nitrogen atoms introduced, the graphite surface G1 and alkyl group A11 form a very weak bond, and a molecular chain is not bonded to the graphite surface G1. On the other hand, by substituting some of the carbon atoms of the graphite with boron or nitrogen atoms, the graphite surface G2 and the alkyl group A12 are bonded, and the graphite layers are covalently bonded. Herein, the boron or nitrogen atoms added to graphite and substituted for carbon atoms serve as acceptors or donors for alkyl groups, and it is therefore thought that electronic localization occurs in the graphite surface. Accordingly, it is speculated that chemical bonds are formed in the out-of-plane direction. When the graphite layers are bonded by such chemical bonds, the interlayer distance between the graphite layers can be maintained constant, thus making it possible to form spaces capable of storing hydrogen between the graphite layers. Moreover, these bonds are chemical bonds different from bonds by intermolecular force, and, accordingly, for example, crush by external pressure, exfoliation of layers, or breakage of the bonds by heat, moisture, and the like are suppressed, thus allowing the material to effectively store hydrogen even when high-pressure hydrogen or low-purity hydrogen is introduced.

As apparent from the aforementioned results, the hydrogen storage material according to the embodiments of the present invention can store hydrogen in the hydrogen storage regions at high density even in high-pressure hydrogen, and the hydrogen storage capacities per unit mass and per unit volume of the hydrogen storage material are increased. Moreover, the constitution in which the molecular layers include substitutional atoms which are different atoms substituted for carbon atoms can hold the spacing between the molecular layers in a structurally more stable manner and maintain the hydrogen storage regions, thus increasing the hydrogen storage capacity in high-pressure hydrogen. Furthermore, such a constitution makes it possible to surely manufacture a hydrogen storage material with high hydrogen storage capacity by a simple method.

Next, a description is given of Example 9 and Comparative Examples 9 and 10.

<Hydrogen Storage Capacity Calculation>

Hydrogen storage capacities of Example 9 and Comparative Examples 9 and 10 were calculated by computer simulation with a computer. For the calculation, the Monte Carlo calculation which is a molecular simulation for thermodynamic equilibrium was used. The Monte Carlo method is a stochastic method which stochastically calculates an arrangement of molecules or atoms. The hydrogen storage capacity was estimated by the Monte Carlo calculation using a grand canonical ensemble as a statistic ensemble in which the number of particles, volume, and temperature of the system were prescribed, that is, grand canonical Monte Carlo method.

The Monte Carlo calculation required interactions between atoms, and herein, an interaction between two molecules, that is, the two-body potential, was defined. As the two-body potential, the most typical Lennard-Jones 12-6 potential shown by the following equation (1) was used.

$$U(r) = 4e((\sigma/r)12 - (\sigma/r)6) \qquad \text{Equation (1)}$$

Herein, u(r) indicates an interatomic potential, and e and $\sigma$ are constants specific to the atomic pair, which respectively correspond to depth of the well of the potential curve and the intermolecular distance (substantial atom diameter) where the potential energy is 0. Herein, values of e and $\sigma$ were based on a universal force field, which was the most typical molecular field.

The calculation of the hydrogen storage capacity was performed for 298 K and a hydrogen pressure of 10 MPa.

Table 4 shows cross-link density, area density, and hydrogen storage capacity of Examples 13 to 15.

|  | Cross link density (%) | Area density ($/m^2$) | Hydrogen storage capacity ($g/cm^3$) |
|---|---|---|---|
| Example 13 | 3.125 | 0.005965151 | 0.0151665 |
| Example 14 | 6.25 | 0.011930302 | 0.0015675 |
| Example 15 | 12.5 | 0.023860604 | 0.00108 |

Example 13

In Example 13, the graphite layers were assumed to be cross-linked with ethylene polymer. It was assumed that the spacing between graphite layers was about 1.1 nm and the number of ethylene chains introduced was 3.125% of the number of carbon atoms in the graphite surface. The area density of ethylene chains in the graphite surface in this case was $0.006 \times 10^{20}$ $/m^2$. The hydrogen storage capacity per unit volume was 0.015 $g/cm^3$.

Example 14

In Example 14, the graphite layers were assumed to be cross-linked with ethylene polymer. It was assumed that the spacing between graphite layers was about 1.1 nm and the number of ethylene chains introduced was 6.25% of the number of carbon atoms in the graphite surface. The area density of ethylene chains in the graphite surface in this case was $0.012 \times 10^{20}$ $/m^2$. The hydrogen storage capacity per unit volume was 0.016 $g/cm^3$.

Example 15

In Example 15, the graphite layers were assumed to be cross-linked with ethylene polymer. It was assumed that the spacing between graphite layers was about 1.1 nm and the number of ethylene chains introduced was 12.5% of the number of carbon atoms in the graphite surface. The area density of ethylene chains in the graphite surface in this case was $0.024 \times 10^{20}$ $/m^2$. The hydrogen storage capacity per unit volume was 0.001 $g/cm^3$.

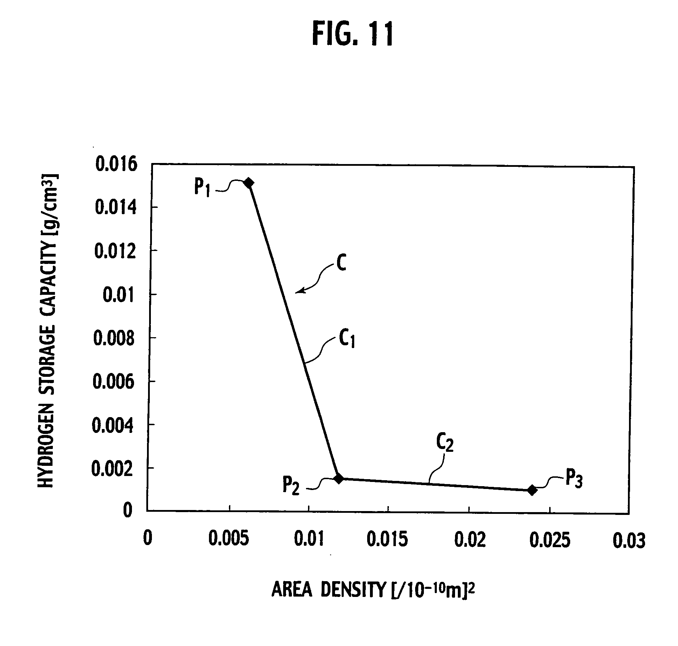

FIG. 11 shows a relation between the area density of ethylene chains and the hydrogen storage capacity. In FIG. 11, C indicates a characteristic curve showing a relation between the area density and the hydrogen storage capacity. As shown by the graph, the characteristic curve is composed of a straight section C1 with a steep slope and a straight section C2 with a gentle slope. Points P1 to P3 indicate hydrogen storage capacities of Examples 9 and Comparative Examples 9 and 10, respectively. As shown in FIG. 11, when the area density of ethylene chains is $0.024 \times 10^{20}$ $/m^2$, the hydrogen storage capacity is low. When the area density is less than $0.012 \times 10^{20}$ $/m^2$, the hydrogen storage capacity rapidly increases. Especially for an area density of $0.006 \times 10^{20}$ $/m^2$, the hydrogen storage capacity is very high. This is thought to be because, when the density of ethylene chains bonding graphite layers is increased, space available for storing hydrogen is reduced and most of the hydrogen storage region does not effectively operate when the area density is not less than $0.012 \times 10^{20}$ $/m^2$. It was thus found that the area density of ethylene chains introduced between graphite layers was limited.

Hereinabove, the embodiments are described, but it should not be understood that the description and drawings constituting a part of the disclosure of the aforementioned embodiments limit the preset invention. Various alternative embodiments, examples, and operating techniques will be apparent to those skilled in the art from this disclosure.

The entire contents of Japanese Patent Applications No. 2005-68449 (filed on March 11, 2005) and No. 2005-150748 (filed on May 24, 2005) are incorporated herein by reference.

**Industrial Applicability**

The hydrogen storage material of the present invention can store hydrogen within the hydrogen storage material at high density even in high-pressure hydrogen, and the hydrogen storage capacities per unit mass and unit volume of the hydrogen storage material are increased. Accordingly, the hydrogen storage material of the present invention is applicable to a fuel cell vehicles and the like.

**Claims**

1. A hydrogen storage material, comprising:

    molecular layers stacked on one another in parallel and mainly composed of six-membered rings having carbon atoms; and
    protrusions protruding from atomic planes of a pair of adjacent ones of the molecular layers by a length of not more than an interlayer distance of the adjacent molecular layers.

2. The hydrogen storage material according to claim 1, wherein the protrusions are bonded to the atomic planes by bonds selected from covalent bonds, ionic bonds, and metallic bonds.

3. The hydrogen storage material according to claim 1, wherein the protrusions are joints chemically bonding the atomic planes of the adjacent molecular layers at discrete positions.

4. The hydrogen storage material according to claim 3, wherein the chemical bonding is bonding selected from covalent bonding, ionic bonding, and metallic bonding.

5. The hydrogen storage material according to claim 1, wherein the molecular layers include a substitutional atom substituted for one of the carbon atoms.

6. The hydrogen storage material according to claim 5, wherein the substitutional atom is a nitrogen or boron atom.

7. The hydrogen storage material according to claim 1, wherein each of the protrusions is composed of a molecular chain.

8. The hydrogen storage material according to claim 7, wherein area density of the protrusions in the molecular layers is not more than $0.01 \times 10^{20}$ /m$^2$.

9. The hydrogen storage material according to claim 8, wherein area density of the protrusions in the molecular layers is not more than $0.006 \times 10^{20}$ /m$^2$.

10. The hydrogen storage material according to claim 7, wherein each of the molecular chains is composed of an organic monomer.

11. The hydrogen storage material according to claim 8, wherein the organic monomer is an organic monomer selected from ethylene, styrene, isoprene, and 1,3-butadiene.

12. The hydrogen storage material according to claim 1, wherein interlayer distance of the adjacent molecular layers is 0.7 to 2.0 nm.

13. A hydrogen storage structure comprising:

    first and second molecular layers; and
    a polymer protruding from an atomic plane of one of the first and second molecular layers by a length of not more than an interlayer distance between the first and second molecular layers to define storage regions capable of storing hydrogen.

**14.** A hydrogen storage structure comprising:

first and second molecular layers; and
a polymer cross-linking the first and second molecular layers to define storage regions capable of storing hydrogen.

**15.** The hydrogen storage structure according to claim 13, wherein the storage regions are hierarchically arranged.

**16.** A method of manufacturing a hydrogen storage material, comprising:

an insertion step of inserting a foreign molecule between a pair of adjacent ones of molecular layers which are stacked on one another in parallel and mainly composed of six-membered rings having carbon atoms to provide an expanded portion between the adjacent molecular layers; and
a protrusion forming step of forming a protrusion protruding from an atomic plane of one of the adjacent molecular layers toward an atomic plane of the other molecular layer by a length of not more than an interlayer distance between the adjacent molecular layers.

**17.** A method of manufacturing a hydrogen storage material, comprising:

an insertion step of inserting a foreign molecule between a pair of adjacent ones of molecular layers which are stacked on one another in parallel and mainly composed of six-membered rings having carbon atoms to provide a storage area capable of storing hydrogen between the adjacent molecular layers; and
a bonding step of chemically bonding at discrete positions the molecular layers between which the foreign molecule is inserted.

**18.** The method of manufacturing a hydrogen storage material according to claim 16, wherein the foreign molecule is a metallic atom.

**19.** The method of manufacturing a hydrogen storage material according to claim 16, wherein the foreign molecule is a volatile molecule, the method further comprising:

after the insertion step, a heating step of heating the molecular layers between which the volatile molecule is inserted.

**20.** The method of manufacturing a hydrogen storage material according to claim 16, wherein the protrusion forming step includes a step of introducing an organic monomer between the adjacent molecular layers.

**21.** The method of manufacturing a hydrogen storage material according to claim 17, wherein the bonding step includes a step of introducing an organic monomer between the adjacent molecular layers.

**22.** The method of manufacturing a hydrogen storage material according to claim 21, wherein the organic monomer is an organic monomer selected from a group consisting ethylene, styrene, isoprene, and 1,3-butadiene.

**23.** The method of manufacturing a hydrogen storage material according to claim 16, the method further comprising:

before the insertion step, a substitution step of substituting one of the carbon atoms of the molecular layers with a nitrogen or boron atom.

**24.** A hydrogen storage, comprising:

the hydrogen storage material according to claim 1.

**25.** A hydrogen storage apparatus, comprising:

the hydrogen storage according to claim 24.

**26.** The hydrogen storage apparatus according to claim 25, wherein the hydrogen storage is encapsulated in a pressure tank.

**27.** A fuel cell vehicle, comprising:

the hydrogen storage apparatus according to claim 25.

# FIG. 1

(a)

(b)

# FIG. 2

# FIG. 3

(a)

(b)

EP 1 882 522 A1

# FIG. 4

(a)

(b)

25

EP 1 882 522 A1

# FIG. 5

26

# FIG. 6

EP 1 882 522 A1

FIG. 7

28

# FIG. 8

# FIG. 9

# FIG. 10

## (a)

## (b)

# FIG. 11

**EP 1 882 522 A1**

<table>
<tr><td colspan="2" align="center">**INTERNATIONAL SEARCH REPORT**</td><td>International application No.<br>PCT/JP2006/304561</td></tr>
</table>

A. CLASSIFICATION OF SUBJECT MATTER
*B01J20/20*(2006.01), *C01B3/00*(2006.01), *C01B31/02*(2006.01), *H01M8/00*(2006.01), *H01M8/04*(2006.01), *H01M8/06*(2006.01)

According to International Patent Classification (IPC) or to both national classification and IPC

B. FIELDS SEARCHED

Minimum documentation searched (classification system followed by classification symbols)
*B01J20/20*(2006.01), *C01B3/00*(2006.01), *C01B31/02*(2006.01), *H01M8/00*(2006.01), *H01M8/04*(2006.01), *H01M8/06*(2006.01)

Documentation searched other than minimum documentation to the extent that such documents are included in the fields searched
Jitsuyo Shinan Koho          1922-1996     Jitsuyo Shinan Toroku Koho     1996-2006
Kokai Jitsuyo Shinan Koho     1971-2006     Toroku Jitsuyo Shinan Koho     1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2005-46702 A (Hitachi Powdered Metals Co., Ltd.),<br>24 February, 2005 (24.02.05),<br>Full text<br>(Family: none) | 1-27 |
| A | JP 2004-268022 A (Nissan Motor Co., Ltd.),<br>30 September, 2004 (30.09.04),<br>Full text<br>& US 2004/161360 A1 | 1-27 |
| A | JP 2005-47737 A (National Institute of Advanced Industrial Science and Technology),<br>24 February, 2005 (24.02.05),<br>Full text<br>(Family: none) | 1-27 |

☒ Further documents are listed in the continuation of Box C.          ☐ See patent family annex.

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>29 June, 2006 (29.06.06) | Date of mailing of the international search report<br>11 July, 2006 (11.07.06) |
|---|---|
| Name and mailing address of the ISA/<br>Japanese Patent Office | Authorized officer |
| Facsimile No. | Telephone No. |

Form PCT/ISA/210 (second sheet) (April 2005)

33

**INTERNATIONAL SEARCH REPORT**

International application No.

PCT/JP2006/304561

C (Continuation). DOCUMENTS CONSIDERED TO BE RELEVANT

| Category* | Citation of document, with indication, where appropriate, of the relevant passages | Relevant to claim No. |
|---|---|---|
| A | JP 11-70612 A (Director General, Agency of Industrial Science and Technology), 16 March, 1999 (16.03.99), Full text (Family: none) | 1-27 |
| P,X | JP 2006-43693 A (Hitachi Powdered Metals Co., Ltd.), 16 February, 2006 (16.02.06), Full text (Family: none) | 14,15,17 |
| P,A | JP 2005-125304 A (Nissan Motor Co., Ltd.), 19 May, 2005 (19.05.05), Full text (Family: none) | 1-27 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002053301 A
- JP 2001026414 A
- JP 11070612 A
- JP 2005068449 A
- JP 2005150748 A

**Non-patent literature cited in the description**

- **Q. WANG ; J. K. JOHNSON.** *J. Phys. Chem. B,* 1991, vol. 103, 277-281